# EUROPEAN PATENT SPECIFICATION

(11) **EP 1 141 882 B1**
(45) Date of publication and mention of the grant of the patent: **30.10.2002**
(21) Application number: 00900111.6
(22) Date of filing: 06.01.2000
(51) Int. Cl.: G06K 9/22

(54) **OPTICAL SCANNER AND SOFTWARE THEREFOR**
Optischer Scanner und zugehörige Software
SCANNEUR ET LOGICIEL AFFERENT

(30) Priority: 07.01.1999 IL 12795899; 03.11.1999 IL 13271999
(43) Date of publication of application: 10.10.2001
(73) Proprietor: Topscan Ltd., 52523 Ramat Gan (IL)
(72) Inventor: REGEV, Reuven, 34992 Haifa (IL); Zilbershein, Erez, Tel Aviv 69364 (IL); Bar-Lev, Avichai, Kiron 55000 (IL); Isaak, Shmuel, Holon 58821 (IL)
(74) Representative: Becker Kurig Straus
(86) International application number: PCT/IL00/00010
(87) International publication number: WO 00/041128

(56) References cited:
- EP-A- 0 279 655
- EP-A- 0 680 005
- US-A- 5 581 633

## Description

### FIELD OF THE INVENTION

The present invention is in the field of text scanners and software for use therewith.

### BACKGROUND OF THE INVENTION

Hand-held optical scanners are used in a variety of applications including text scanning, barcode reading, and picture grabbing. These scanners comprise an optical sensor for acquiring image information that is managed by a central processing unit (CPU) and stored in a memory. The information is typically processed by character recognition software and then sent to a user application such as a word processor, database or spreadsheet.

The viewing area of hand-held scanners at a given instant includes only a small portion of the entire scanned medium. Thus in use, a hand-held scanner is made to pass over the entire scanned medium so as to produce a time series of acquired images where each acquired image corresponds to a small portion of the scanned medium. Since the images are acquired at a constant rate, subsequent reconstruction of the scanned medium from the series of acquired images produces a distorted image due to variation in the scanning speed during scanning. A hand held scanner has a reference scanning speed at which the acquired image is identical to the original. The reference scanning speed is the product of the width (in the scanning direction) of the optical sensor and the rate at which images are acquired by the sensor. Locations in the scanned medium acquired when the scanning speed is below the reference speed appear to be stretched or expanded, while locations acquired when the scanning speed is above the reference speed appear compressed. Such distorted images may not be recognizable by character recognition software. Each acquired image must thus be processed by rescaling it in the scanning direction by a correction factor equal to the instantaneous scanning speed divided by the reference speed. Prior art scanners therefore comprise means for continuously monitoring the instantaneous scanning speed. U.S. Patent 5,083,218, for example, discloses a hand-held scanner comprising a wheel that rolls along the scanned medium during scanning for measuring the instantaneous speed at every moment during the scanning. U.S. Patent 5,023,922 discloses a hand-held scanner with a 2-dimensional optical sensor in which the instantaneous speed is calculated from the time interval required for an image to traverse the sensor. The presence of a wheel or a two dimensional sensor makes the hand held scanner bulky and awkward to use.

European Patent 279,655 discloses a method for processing an image of scanned text using a mode character height for each font in the text.

There is therefore a need in the art to provide a scanner that substantially reduces or overcomes the disadvantages of prior art scanners.

### GLOSSARY

There follows a glossary of terms used in the following description and set of claims together with their definitions, some of them known in the art, others having been coined.

***Field of view -*** the portion of the scanned medium acquired by a scanner at one instant.

***Scanned image -*** a two-dimensional image created by moving a scanner over a surface. The scanned image is compiled from the time series of fields of view acquired during scanning.

***Text image -*** A scanned image composed of text in any language.

***Cluster -*** A contiguous group of black pixels in a text image. A black cluster is typically a single character but may be a portion of a single character, or a union of two or more characters.

***Horizontal segment -*** A line of contiguous black pixels parallel to the text line, one pixel high. The length of a horizontal segment is the number of its black pixels.

***Stack -*** A contiguous array of at least a predetermined number of horizontal segments in a scanned image with the following properties:
(a) No two of the horizontal segments are collinear.
(b) The ratio of the length of the longest horizontal segment in the stack to that of the shortest horizontal segment does not exceed a predetermined value.
(c) adjacent horizontal segments in the stack at least partially overlap (i. e. in a given pair of adjacent horizontal segments in the stack, there is at least one black pixel in each of the two horizontal segments acquired from the same field of view).
Each stack has associated with it a height that may be defined, for example, as the number of its composite horizontal segments. Each stack also has associated with it a width that may be defined, for example, as the average length of its horizontal composite segments, the minimal length of its horizontal composite segments, or the length of an arbitrary one of its horizontal segments. The invention is not to be considered as being bound by these definitions, and other definitions of height and width are contemplated within the scope of the invention. Each stack also has associated with it a bounding rectangle of minimum dimensions in which two opposite sides are vertical and two opposite sides are horizontal.

***Essentially vertical stack -*** A stack whose height exceeds a predetermined number in which the ratio of the width of the stack to the width of its bounding rectangle exceeds a predetermined value.

***Character recognition software -*** Any software package for converting a text image into a string of ASCII characters, for example Optical Character Recognition (OCR) software.

***Stop interval -*** A series of consecutive fields of view, the number of which exceed a predetermined number, all of which are nearly identical to the first field of view. Two fields of view are considered to be nearly identical if there does not exist in one of the fields of view a subfield of contiguous pixels of length greater than a predetermined length in which all of the pixels are different from the corresponding pixels in the other field of view.

***Font ratio -*** the ratio of the mode character height (the most common character height) to the most common essentially vertical line width of the characters in a particular font. The font ratio is a characteristic constant of a given font. For most fonts, the font ratio is typically, although not necessarily, around 6.

***Correction factor -*** the instantaneous scanning speed divided by the reference speed.

### SUMMARY OF THE INVENTION

In the following description and set of claims, the direction of the text line as well as the scanning direction of a hand held scanner is arbitrarily designated as the horizontal direction. This designation is being made only for the sake of simplicity in describing the invention. Other scanning directions are also contemplated within the scope of the invention and the invention is not to be considered as being bound by this arbitrary designation.

The present invention provides systems and methods for analyzing images of a scanned text. The systems and methods of the invention may be used with a scanner having a one-dimensional (linear) optical sensor that creates an image one pixel wide and n pixels in length (height), and not having mechanical moving parts such as a wheel. A series of scanned images is acquired at a constant rate determined by an internal clock inside the scanner when the scanner's sensor array is moved over a surface so as to scan a line of symbols. Image information obtained by the sensor may be stored and processed in a computer processing unit.

The present invention provides a method for determining the instantaneous correction factor of a text image during scanning by a hand held scanner. Since the instantaneous correction factor is equal to the instantaneous scanning speed divided by the reference speed of the scanner, the method is equivalent to a method for determining the instantaneous scanning speed. The method may be used with a scanner not having any mechanical moving parts. It may also be used with scanners having only a one-dimensional optical sensor. The method of the invention may be used for removing distortions in a text image due to variation in the scanning speed in order to make the text recognizable by optical character recognition software or readable as an image by a user.

The method of the invention is based upon the observation that in a scanned image, vertical distances (i.e. distances perpendicular to the scanning direction) at any particular location are independent of the instantaneous scanning speed at that location. In particular, in a text image, the height of a text character is independent of the scanning speed. The mode character height in a text image is therefore independent of any variability in the scanning speed during acquisition of the text image. As disclosed below, the instantaneous scanning velocity, or equivalently the instantaneous correction factor, at a location in a text image comprising an essentially vertical stack can be determined from the width of the essentially vertical stack, the mode character height of the scanned text, and the font ratio.

The invention thus provides a scanner for scanning a surface characterized in that it has a one-dimensional optical sensor and has no mechanical moving parts for determining the scanning speed.

The invention also provides a method for processing an acquired text image obtained by scanning a text with a scanner, the text having one or more fonts, each font having a font ratio, each location in the text having been scanned at an instantaneous scanning speed, where the text image is distorted due variability of the instantaneous scanning speed, the method comprising the following steps:
(a) Providing a mode character height for each font; and
(b) utilizing said mode character height and font ratio for constructing a correction factor in order to correct the distorted text image.

The invention further provides a storage medium storing an executable computer program for processing an acquired text image obtained by scanning a text with a scanner, the text having one or more fonts, each font having a font ratio, each location in the text having been scanned at an instantaneous scanning speed, where the text image is distorted due variability of the instantaneous scanning speed, the processing comprising the following steps:
(a) Providing a mode character height for each font; and
(b) utilizing said mode character height and font ratio for constructing a correction factor in order to correct the distorted text image.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
**Fig. 1** shows a hand-held scanner for scanning a surface having a one dimensional optical sensor and not having any moving parts for determining the scanning speed;
**Fig. 2** shows a block diagram of the processing carried out according to the invention;
**Fig. 3** shows 7 characters resolved into 8 clusters;
**Fig. 4, a** and **b** each show a cluster decomposed into horizontal segments;
**Fig. 5a** shows **a** line of text to be scanned;
**Fig. 5b** shows a text image obtained by scanning the line of text of Fig. 5a with a hand-held scanner;
**Fig. 6** shows a flow chart for determining the instantaneous scanning speed according to the invention;
**Fig. 7 a-c** show parts of an acquired text image; and
**Fig. 8** shows the acquired text image of Fig. 7 after correction in accordance with the invention.

### DETAILED DESCRIPTION OF A SPECIFIC EMBODIMENT

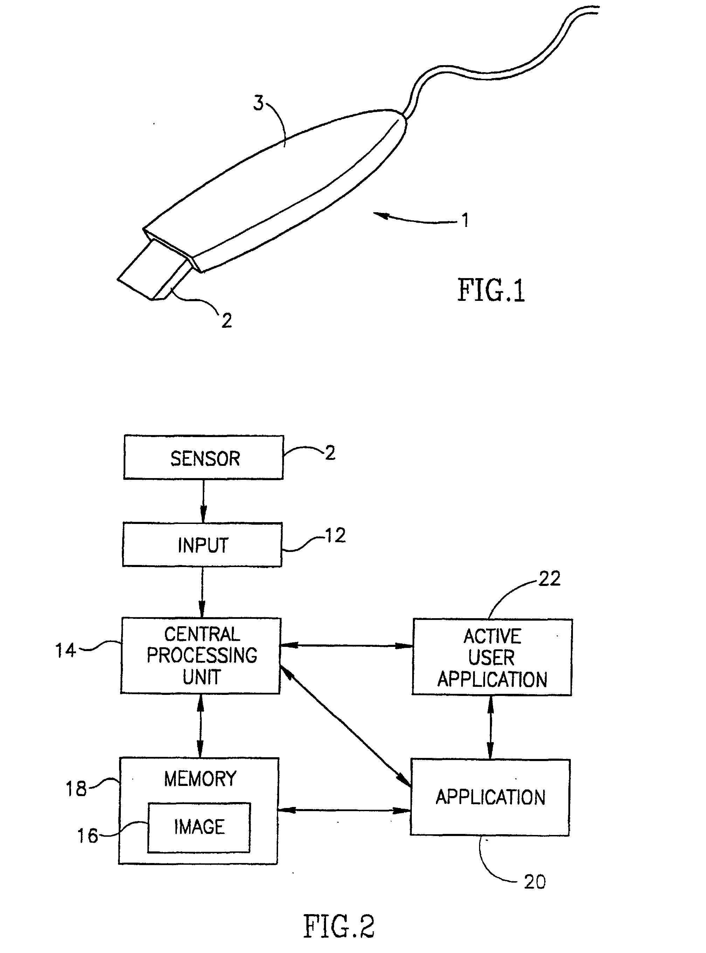

Fig. 1 shows a scanner, generally designated as **1,** that may be used with the system and method of the invention. The scanner **1** has a one-dimensional optical sensor and not having mechanical moving -parts such as a wheel for determining scanning speed. The scanner also has a one-dimensional optical sensor **2,** a handle **3** for grasping, and no mechanical moving parts. A series of scanned images is acquired by moving the sensor **2** over a surface. Fig. 1 is a block diagram of a system comprising a one-dimensional scanner and a processor according to the invention. The sensor **2** is used to scan a line of symbols. The sensor is linked to the input port of central processing unit **12.** The input function is managed by a CPU **14.** Image information **16** obtained by sensor **10** may be stored by the CPU in a memory **18.** The structure of the system of the invention is not bound to the specific architecture depicted in Fig. 2.

In its second aspect the present invention provides a method for determining the instantaneous correction factor of a text image during scanning by a hand held scanner. The method may be used with a scanner not having any mechanical moving parts. It may also be used with scanners having only a one-dimensional optical sensor. The method of the invention may be used for removing distortions due to variation in the scanning speed in the text image **16** acquired by the sensor **2** in order to make the text recognizable by character recognition software or by a user. The method, to be described below in detail, is carried out by an application 20 that processes the image either in real time or off-line in respect of image *a priori* stored in memory **18.** The results of the processing may optionally be processed by character recognition software before being returned to the CPU or sent to interface **22.**

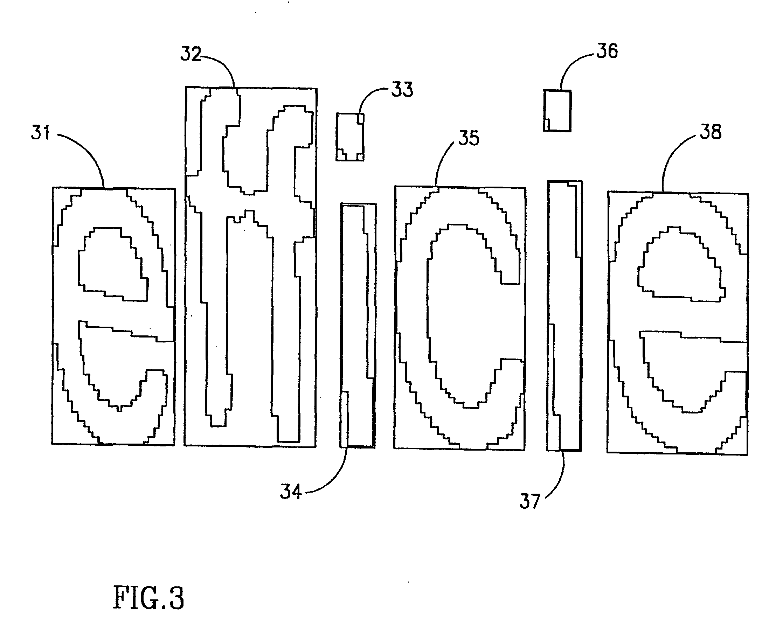

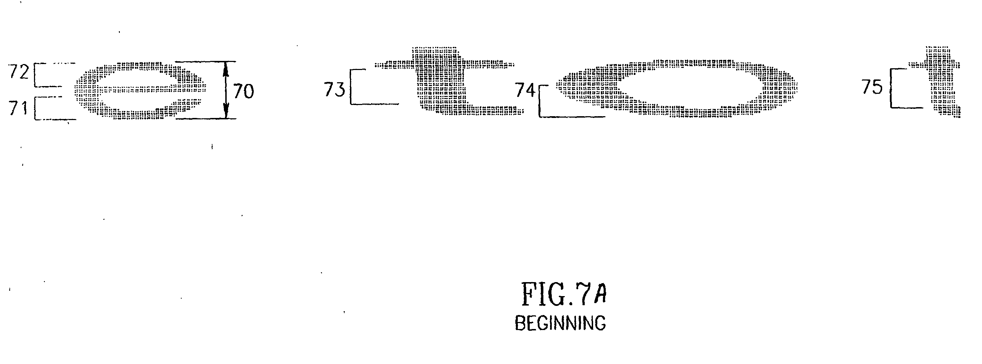

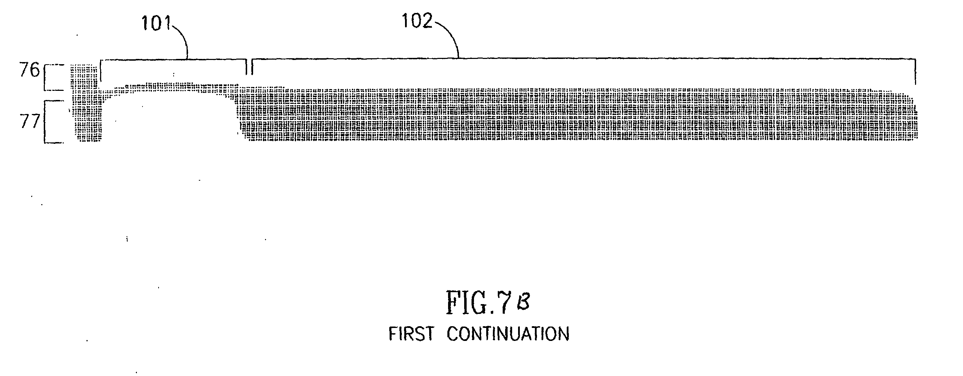

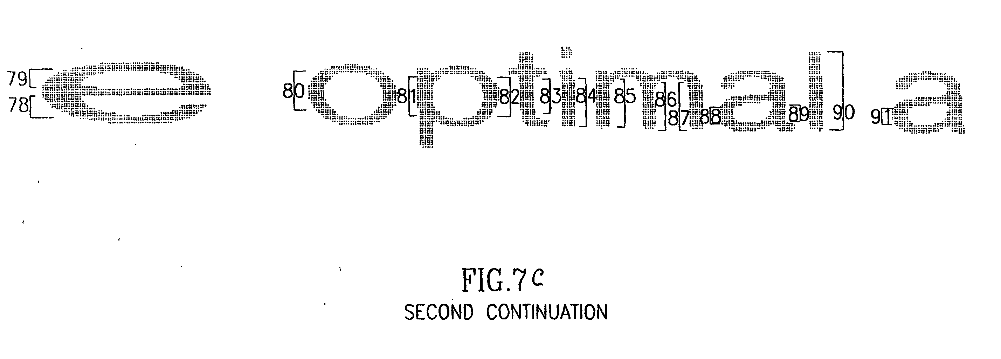

Referring now to Fig. 3, 7 characters are shown resolved into eight clusters. Clusters 31, 35 and 38 each form an entire character (e, c and e, respectively). Cluster 32 is a union of two characters (ff). Clusters 33, 34, 36 and 37 each contain a part of a character (i).

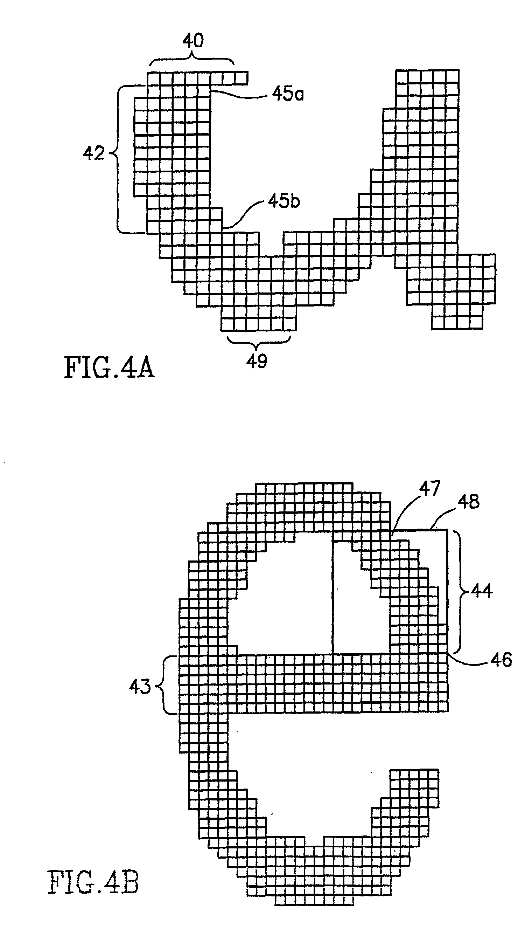

Fig. 4 shows two clusters divided into composite pixels. In Fig. 4a, horizontal line **49,** for example, has a length of 6 (pixels), and horizontal line **40** has a length of 8. Stack **42** has a height of 12. If horizontal line **40** were to be added to stack **42,** the resulting composite structure would not be a stack because the ratio of the length of the longest horizontal segment (8) to that of the shortest horizontal segment (5) in the structure would exceed a typical predetermined value of 1.3. Two of the twelve horizontal lines constituting stack **42** designated as **45a** and **45b** have a length of 5, while the other ten have a length of 6. The width of stack **42** (the average length of its horizontal lines) is thus calculated to be 5.83. In Fig. 4b stack **43** has a height of 6 and a width of 28, which is equal to the cluster width. Stack 43 is not considered to be an essentially vertical stack because its height does not exceed a typical predetermined value of about 8. Stack **44** is composed of 13 horizontal line segments of lengths of 5-6. In this stack, there is no overlap between the lowest **46** and highest **47** horizontal line segments. Stack **44** is also not an essentially vertical stack because the ratio of its width (6.3) to the width of its bounding rectangle **48** (12) does not exceed a typical predetermined value of about 0.75. The above mentioned predetermined values used in reference to the clusters of Fig. 4, are by way of example only, and the invention is not bound by these predetermined values.

Fig. 5a shows a line of text to be scanned. Arrows **56** indicate the mode character height, and arrows **57** show the most common vertical line width. In some fonts, essentially vertical lines are slightly slanted from a true vertical position. The ratio of the mode character height **56** to the most common essentially vertical line width **57** (the font ratio) is a characteristic constant of the font.

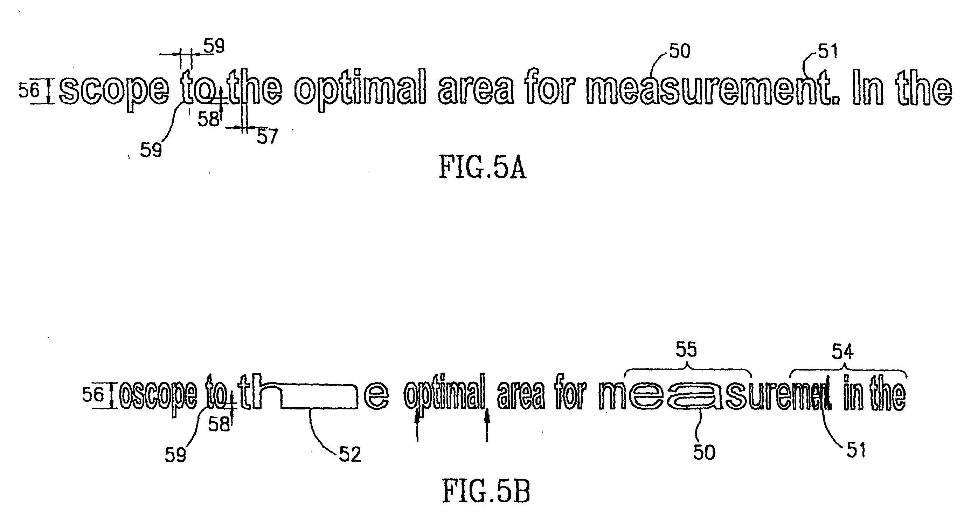

Fig. 5b shows a typical text image obtained by scanning the text line in Fig. 5a with a hand-held scanner. The text appears distorted due to variation in the scanning speed. Character widths are inversely proportional to the scanning speed. As can be seen by comparing the width of characters **50** and **51** in the original text (Fig. 5a) with their images in the text scan (Fig 5b), in interval **54** the instantaneous scanning speed was greater than the reference speed of the scanner, while in interval **55** the instantaneous scanning speed was below the reference speed. Vertical line widths, for example that of vertical line **59,** are also inversely proportional to the scanning speed. The mode character height **56**, however, is unaffected by the variability in the scanning speed and is the same in Figs. 5a and 5b. Horizontal line widths, for example that of line **58,** are also unaffected by variations in scanning speed. Interval **52** is a typical stop segment.

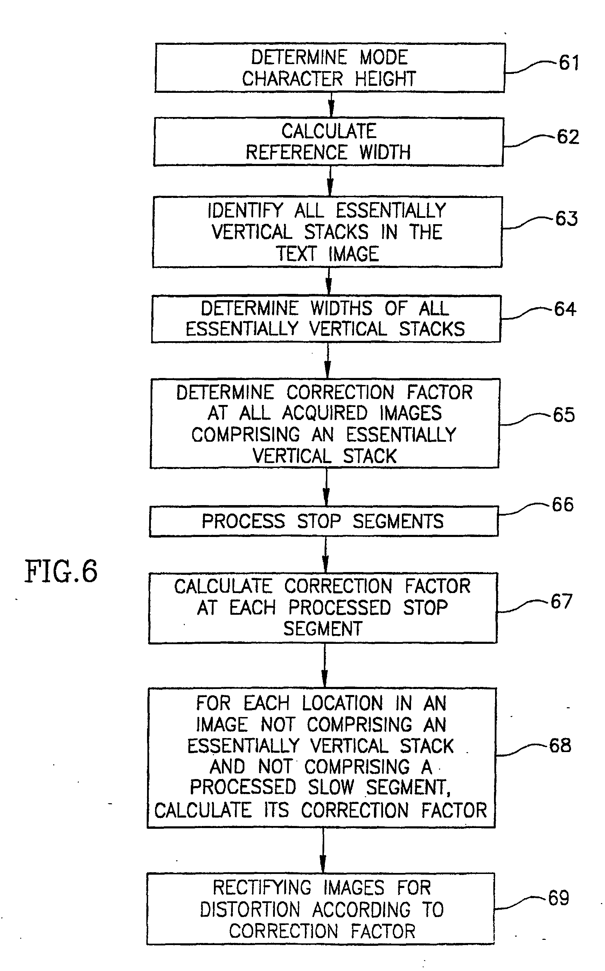

Fig. 6 shows a flow chart describing the method in accordance with one embodiment of the invention for determining the instantaneous correction factor at different locations in an acquired text image such as the one shown in Fig. 7. The font ratio for the font of the text from which the acquired text image shown in Fig. 7 was obtained is, by this example, about 6. The mode height of the text characters is determined **60,** which, as stated above, is independent of any variability in the scanning speed. The mode character height of the acquired text shown in Fig. 7 is indicated by double arrow **70** and is equal, by this example, to 26 pixels. A reference width is calculated **61** which is equal to the mode character height divided by the font ratio. For the text image of Fig. 7, the reference width is thus calculated to be 26/6, or 4.3 pixels. Since the font ratio is defined as the ratio of the mode character height to the most common essentially vertical line width of the characters comprising the font, the reference width is the expected width of an essentially vertical stack when the scanning speed is equal to the reference speed. All essentially vertical stacks in the text image are then identified **63.** Numerals **71-91** indicate all of the 21 essentially vertical stacks in Fig. 7. The widths of the essentially vertical stacks are determined **64.** Essentially vertical stacks having a width greater than the reference width are those where the instantaneous scanning speed was below the reference speed of the scanner. Essentially vertical stacks having a width less than the reference speed are those where the instantaneous scanning speed was above the reference speed of the scanner. The correction factor at an image comprising an essentially vertical stack acquired when the scanning speed was below the reference speed is then obtained **65** by dividing the reference width by the width of the essentially vertical stack. For example, for essentially vertical stack **86,** whose width is greater than the reference width, the correction factor is thus calculated to be 4.3/5.5, or 0.8. The correction factor at an image comprising an essentially vertical stack acquired when the scanning speed was above the reference speed is 1.

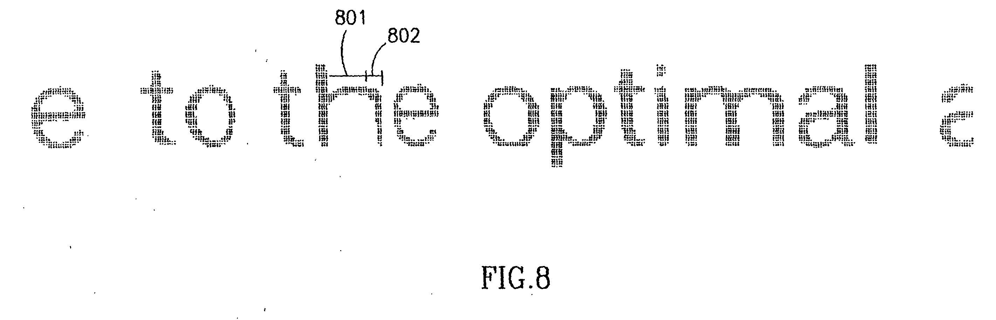

The invention also provides for determining the correction factor at a stop segment in an acquired text image. A stop segment **102** is seen in Fig. 7. In stop segment **102,** all of the fields of view are nearly identical to the first field of view in the segment, which is indicative of a location in the acquired text image where the scanning speed was close to 0. Stop segment **102** is divided into a predetermined number of contiguous subsegments **66.** In Fig.7, stop segment **102** was divided into 4 subsegments. In each subsegment, at least one, but not all, of the consecutive fields of views is then deleted from the subsegment **67.** For example, if all of the fields of view are deleted from each subsegment except for one, then stop segment **102** would appear as segment **802** in Fig. 8. The correction factor in a stop segment is a predetermined value, for example, 0.1, which indicates that the instantaneous scanning speed in the stop segment was very slow.

Reverting to Fig. 6, the correction factor at a location not comprising an essentially vertical stack and not comprising a stop segment that has been processed as above, is determined by one of the following methods **68.** (i) Two essentially vertical stacks are found flanking the location on different sides. The correction factor is then determined at the location between the two essentially vertical stacks by interpolation of the correction factors at the two flanking essentially vertical stacks. (ii) Two stop segments are found flanking the location on different sides. The correction factor is then determined at the location between the two stop segments by interpolation of the correction factors at the two flanking stop segments. (iii) A stop segment and an essentially vertical stack are found flanking the location on different sides. The correction factor is then determined at the location between the stop segment and the essentially vertical stack by interpolation of the correction factors at the stop segment and the essentially vertical stack.

Once the correction factors during scanning of the text have been determined, the text image is rectified for distortions arising from variation in the scanning speed **69.** This is accomplished by deleting fields of view at each location where the correction factor is less than one so as to achieve a rescaling equal to the correction factor, as is known *per se.* When an essentially vertical stack is rectified in this way, it resembles the essentially vertical line in the text image which it represents in the scanned image. Fig. 8 shows the acquired text image shown in Fig. 7 after having been corrected.

While the invention has been described with a certain degree of particularity, it will be immediately apparent to those versed in the art that the method may be varied without departing from the scope of the invention. In particular, the order in which the steps of the method may be carried out may be changed without departing from the scope of the invention as defined in the following claims.

## Claims

1. A method for processing an acquired text image obtained by scanning a text with a scanner, the text having one or more fonts, each font having a font ratio, the font ratio being the ratio of the mode character height to the most common essentially vertical line width of the characters, the mode character height being the most common character height, each location in the text having been scanned at an instantaneous scanning speed, where the text image is distorted due variability of the instantaneous scanning speed, the method comprising the following step:
(a) providing a mode character height for each font, the method being **characterized in** further comprising a step of:
(b) utilizing said mode character height and font ratio for constructing a correction factor in order to correct the distorted text image.

2. The method of Claim 1 for determining the instantaneous correction factor at one or more essentially vertical stacks in an acquired text image, an essentially vertical stack being a stack whose height exceeds a first predetermined number and in which the ratio of a width of the stack to the width of a bounding rectangle exceeds a second predetermined value, the essentially vertical stacks having widths, wherein said step (b) further includes utilizing the widths of one or more essentially vertical stacks in the acquired text image.

3. A method according to Claim 2 comprising the steps of:
(a) determining the mode character height of the scanned text (60);
(b) calculating a reference line width by dividing the mode character height by the font ratio (61);
(c) determining the height and width of the one or more essentially vertical stacks (64);
(d) calculating an instantaneous correction factor for any one of the one or more essentially vertical stacks by dividing the reference width by the width of the essentially vertical stack to obtain the instantaneous correction factor at the essentially vertical stack (65); and
(e) setting the correction factor equal to one when the correction factor calculated according to step (d) is greater than one.

4. The method of Claim 3, further comprising the steps of:
(a) partitioning one or more stop segments into a predetermined number of subsegments of consecutive fields of view, a field of view being a portion of the acquired text image acquired by the scanner at one instant; and
(b) deleting from each subsegment at least one, but not all, of the fields of view in the subsegment.

5. The method of Claim 4 further comprising the step of calculating an instantaneous correction factor in one or more stop segments, a stop segment being a series of consecutive fields of view, the number of which exceeds a predetermined number, all of which being nearly identical to a first field of view in the series, two fields of view being nearly identical if there does not exist in one of the two fields of view a subfield of contiguous pixels of length greater than a predetermined length in which all of the pixels are different from corresponding pixels in the other field of view, wherein the instantaneous correction factor in a stop segment is a predetermined value.

6. A method for calculating an instantaneous correction factor at a location in an acquired text image not comprising an essentially vertical stack and not comprising a stop segment that has been corrected according to the method of Claim 5 (68), wherein the method comprises either:
(a) identifying essentially vertical stacks flanking the location on different sides; calculating the instantaneous correction- factor at each one of the two essentially vertical stacks by the method of Claim 2 or 3, and calculating the instantaneous correction factor at said location by interpolation of the instantaneous correction factors of the essentially vertical stacks;
(b) identifying a subsegment in each of two stop segments flanking the location on different sides, calculating the instantaneous correction factor at each one of the two subsegments by the method of Claim 5, and calculating the instantaneous correction factor at said location by interpolation of the instantaneous correction factors of the subsegments; or
(c) identifying an essentially vertical stack and a subsegment of a stop segment flanking the location on different sides, calculating the instantaneous correction factor at the essentially vertical stack by the method of Claim 2 or 3, calculating the instantaneous correction factor at the subsegment by the method of Claim 5, and calculating the instantaneous correction factor at said location by interpolation of the instantaneous correction factors of the essentially vertical stack and the stop segment.

7. A method for removing distortions at one or more locations in an acquired text image due to variation in the scanning speed during scanning of a text (69), the method comprising the steps of:
(a) calculating the instantaneous correction factor at the one or more locations in the text image by the method of any one of Claims 1 to 6; and
(b) deleting fields of view at each of the one or more locations where the correction factor is less than one so as to produce a rescaling of the acquired text image at each location by a factor substantially equal to the instantaneous correction factor at each location.

8. The method of Claim 7 further comprising the step of processing the text image by character recognition software.

9. A system for processing a text comprising:
(a) a scanner having a one-dimensional optical sensor and no mechanical parts for determining scanning speed; and
(b) a CPU coupled to a storage medium and executing software for carrying out the method according to any one of Claims 1 to 8.

10. A storage medium storing an executable computer program for processing an acquired text image obtained by scanning a text with a scanner, the text having one or more fonts, each font having a font ratio, each location in the text having been scanned at an instantaneous scanning speed, where the text image is distorted due to variability of the instantaneous scanning speed, the processing comprising the following step:
(a) providing a mode character height for each font, the storage medium being **characterized in that** the processing further comprises:
(b) utilizing said mode character height and font ratio for constructing a correction factor in order to correct the distorted text image.

11. The storage medium of Claim 10 storing an executable computer program for determining the instantaneous correction factor at one or more essentially vertical stacks in an acquired text image, the essentially vertical stacks having widths, wherein said step (b) further includes utilizing the widths of one or more essentially vertical stacks in the acquired text image.

12. The storage medium according to Claim 11 wherein the processing comprises the steps of:
(a) determining the mode character height of the scanned text;
(b) calculating a reference line width by dividing the mode character height by the font ratio;
(c) determining the height and width of the one or more essentially vertical stacks;
(d) calculating an instantaneous correction factor for any one of the one or more essentially vertical stacks by dividing the reference width by the width of the essentially vertical stack to obtain the instantaneous correction factor at the essentially vertical stack.

13. The storage medium of Claim 12, wherein the processing further comprises the steps of:
(a) partitioning one or more stop segments into a predetermined number of subsegments of consecutive fields of view; and
(b) deleting from each subsegment at least one, but not all, of the fields of view in the subsegment.

14. The storage medium of Claim 13 wherein the processing further comprises calculating an instantaneous correction factor in one or more stop segments wherein the instantaneous correction factor for a stop segment is a predetermined value.

15. The storage medium of Claim 14 wherein the processing further comprises calculating an instantaneous correction factor at a location in an acquired text image not comprising an essentially vertical stack and not comprising a subsegment of a stop segment that has been corrected according to the method of Claim 5, wherein the processing comprises either:
(a) identifying essentially vertical stacks flanking the location on different sides; calculating the instantaneous correction factor at each one of the two essentially vertical stacks by the method of Claim 2 or 3, and calculating the instantaneous correction factor at said location by interpolation of the instantaneous correction factors of the essentially vertical stacks;
(b) identifying a subsegment in each of two stop segments flanking the location on different sides, calculating the instantaneous correction factor at each one of the two subsegments by the method of Claim 5, and calculating the instantaneous correction factor at said location by interpolation of the instantaneous correction factors of the subsegments; or
(c) identifying an essentially vertical stack and a subsegment of a stop segment flanking the location on different sides, calculating the instantaneous correction factor at the essentially vertical stack by the method of Claim 2 or 3, calculating the instantaneous correction factor at the subsegment by the method of Claim 6, and calculating the instantaneous correction factor at said location by interpolation of the instantaneous correction factors of the essentially vertical stack and the stop segment.

16. A storage medium storing an executable computer program for processing an acquired text image to remove distortions at one or more locations in the acquired text image due to variation in the scanning speed during scanning of a text, the processing comprising the steps of:
(a) calculating the instantaneous correction factor at the one or more locations in the text image by the method of any one of Claims 1 to 6; and
(b) deleting fields of view at each of the one or more locations where the correction factor is less than one so as to produce a rescaling of the acquired text image at each location by a factor substantially equal to the instantaneous correction field at each location.

17. The storage medium of Claim 16 for processing the text image by character recognition software.

## Patentansprüche

1. Verfahren zum Bearbeiten eines erworbenen Textabbilds, das durch Scannen eines Texts mit einem Scanner erhalten wird, wobei der Text eine oder mehrere Schriftarten aufweist, wobei jede Schriftart ein Schriftverhältnis aufweist, wobei das Schriftverhältnis das Verhältnis der modalen Zeichenhöhe zu der häufigsten im wesentlichen vertikalen Linienbreite ist, wobei die modale Zeichenhöhe die häufigsten Zeichenhöhe ist, wobei jeder Ort in dem Text mit einer momentanen Scan-Geschwindigkeit gescannt wurde, wobei das Textabbild aufgrund einer Veränderlichkeit der momentanen Scan-Geschwindigkeit verzerrt ist, wobei das Verfahren folgende Schritte umfasst:
(a) Bereitstellen einer modalen Zeichenhöhe für jede Schriftart,
wobei das Verfahren **dadurch gekennzeichnet ist, dass** es ferner einen Schritt umfasst:
(b) Verwenden der modalen Zeichenhöhe und des Schriftverhältnisses um einen Korrekturfaktor zu bilden, um das verzerrte Textabbild zu korrigieren.

2. Verfahren nach Anspruch 1 zum Bestimmen des momentanen Korrekturfaktors an einem oder mehreren im wesentlichen vertikalen Stapeln in einem erworbenen Textabbild, wobei ein im wesentlicher vertikaler Stapel ein Stapel ist, dessen Höhe eine erste vorbestimmte Anzahl übersteigt und in dem das Verhältnis einer Breite des Stapels zu der Breite eines eingrenzenden Rechtecks einen zweiten vorbestimmten Wert übersteigt, wobei die im wesentlichen vertikalen Stapel Breiten aufweisen, wobei der Schritt (b) ferner Verwenden der Breiten eines oder mehrerer im wesentlichen vertikaler Stapel in dem erworbenen Textabbild einschließt.

3. Verfahren gemäß Anspruch 2, die Schritte umfassend:
(a) Bestimmen der modalen Zeichenhöhe des gescannten Texts (60);
(b) Berechnen einer Referenzlinienbreite durch Dividieren der modalen Zeichenhöhe durch das Schriftverhältnis (61);
(c) Bestimmen der Höhe und der Breite des einen oder der mehreren im wesentlichen vertikalen Stapel (64);
(d) Berechnen eines momentanen Korrekturfaktors für irgendeinen des einen oder der mehreren im wesentlichen vertikalen Stapel durch Dividieren der Referenzbreite durch die Breite des im wesentlichen vertikalen Stapels, um den momentanen Korrekturfaktor an dem im wesentlichen vertikalen Stapel (65) zu erhalten; und
(e) Setzen des Korrekturfaktors gleich eins, wenn der gemäß Schritt (d) berechnete Korrekturfaktor größer als eins ist.

4. Verfahren nach Anspruch 3, ferner die Schritte umfassend:
(a) Unterteilen eines oder mehrerer Stopsegmente in eine vorbestimmte Anzahl von Untersegmenten aufeinanderfolgender Sichtfelder, wobei ein Sichtfeld ein Bereich des erworbenen Textabbilds ist, das durch den Scanner in einem Augenblick erworben wird; und
(b) Entfernen aus jedem Untersegment mindestens eines aber nicht alle der Sichtfelder in dem Untersegment.

5. Verfahren nach Anspruch 4, das ferner den Schritt zur Berechnung eines momentanen Korrekturfaktors in einem oder mehreren Stopsegmenten umfasst, wobei ein Stopsegment eine Folge aufeinanderfolgender Sichtfelder ist, deren Anzahl eine vorbestimmte Anzahl übersteigt, wobei alle von ihnen annährend identisch mit einem ersten Sichtfeld in der Folge sind, wobei zwei Sichtfelder annährend identisch sind, wenn es in einem der zwei Sichtfelder nicht ein Unterfeld aneinander grenzender Pixel von einer Länge größer als eine vorbestimmte Länge gibt, in denen alle der Pixel unterschiedlich zu den entsprechenden Pixel in dem anderen Sichtfeld sind, wobei der momentane Korrekturfaktor in einem Stopsegment ein vorbestimmter Wert ist.

6. Verfahren zum Berechnen eines momentanen Korrekturfaktors an einem Ort in einem erworbenen Textabbild, das nicht einen im wesentlichen vertikalen Stapel umfasst und das nicht ein Stopsegment umfasst, das gemäß dem Verfahren nach Anspruch 5 (68) korrigiert wurde, wobei das Verfahren umfasst entweder:
(a) Ermitteln von im wesentlichen vertikalen Stapeln, die den Ort an verschiedenen Seiten flankieren; Berechnen des momentanen Korrekturfaktors an jedem der zwei im wesentlichen vertikalen Stapel durch das Verfahren nach Anspruch 2 oder 3, und Berechnen des momentanen Korrekturfaktors an dem Ort durch Interpolieren der momentanen Korrekturfaktoren der im wesentlichen vertikalen Stapel;
(b) Ermitteln eines Untersegments in jedem von zwei Stopsegmenten, die den Ort an verschiedenen Seiten flankieren, Berechnen des momentanen Korrekturfaktors an jedem der zwei Untersegmente durch das Verfahren nach Anspruch 5, und Berechnen des momentanen Korrekturfaktors an dem Ort durch Interpolieren der momentanen Korrekturfaktoren der Untersegmente; oder
(c) Ermitteln eines im wesentlichen vertikalen Stapels und eines Untersegments eines Stopsegments, die den Ort an verschiedenen Seiten flankieren, Berechnen des momentanen Korrekturfaktors an dem im wesentlichen vertikalen Stapel durch das Verfahren nach Anspruch 2 oder 3, Berechnen des momentanen Korrekturfaktors an dem Untersegment durch das Verfahren nach Anspruch 5, und Berechnen des momentanen Korrekturfaktors an dem Ort durch Interpolieren der momentanen Korrekturfaktoren des im wesentlichen vertikalen Stapels und des Stopsegments.

7. Verfahren zum Beseitigen von Verzerrungen an einem oder mehreren Orten in einem erworbenen Textabbild aufgrund einer Veränderung in der Scan-Geschwindigkeit während eines Scannens eines Texts (69), wobei das Verfahren die Schritte umfasst:
(a) Berechnen des momentanen Korrekturfaktors an einem oder mehreren Orten in dem Textabbild durch das Verfahren nach irgendeinem der Ansprüche 1 bis 6; und
(b) Löschen von Sichtfeldern an jedem des einen oder der mehreren Orte, an denen der Korrekturfaktor kleiner als eins ist, um eine Neuskalierung des erworbenen Textabbilds an jedem Ort durch einen Faktor zu erzeugen, der im wesentlichen gleich dem momentanen Korrekturfaktor an jedem Ort ist.

8. Verfahren nach Anspruch 7, das ferner den Bearbeitungsschritt des Textabbilds durch eine Schrifterkennungs-Software umfasst.

9. System zum Bearbeiten eines Texts, umfassend:
(a) ein Scanner mit einem eindimensionalen optischen Sensor und keinen mechanischen Teilen zum Scan-Geschwindigkeits-Bestimmen; und
(b) eine CPU, die an ein Speichermedium gekoppelt ist und die Software ausführt, um das Verfahren gemäß irgendeinem der Ansprüche 1 bis 8 durchzuführen.

10. Speichermedium, das ein aufführbares Computerprogramm speichert, um ein erworbenes Textabbild zu bearbeiten, das durch Scannen eines Texts mit einem Scanner erhalten wird, wobei der Text eine oder mehrere Schriftarten aufweist, wobei jede Schriftart ein Schriftverhältnis aufweist, wobei jeder Ort in dem Text mit einer momentanen Scan-Geschwindigkeit gescannt wurde, wobei das Textabbild aufgrund einer Veränderlichkeit der momentanen Scan-Geschwindigkeit verzerrt ist, wobei das Bearbeiten die folgenden Schritte umfasst:
(a) Bereitstellen einer modalen Zeichenhöhe für jede Schriftart,
wobei das Speichermedium **dadurch gekennzeichnet ist, dass** das Bearbeiten ferner umfasst:
(b) Verwenden der modalen Zeichenhöhe und des Schriftverhältnisses, um einen Korrekturfaktor zu bilden, um das verzerrte Textabbild zu korrigieren.

11. Speichermedium nach Anspruch 10, das ein ausführbares Computerprogramm speichert, um den momentanen Korrekturfaktor an einem oder mehreren im wesentlichen vertikalen Stapeln in einem erworbenen Textabbild zu bestimmen, wobei die im wesentlichen vertikalen Stapel Breiten aufweisen, wobei der Schritt (b) ferner Verwenden der Breiten eines oder mehrerer im wesentlichen vertikalen Stapel in dem erworbenen Textabbild einschließt.

12. Speichermedium gemäß Anspruch 11, wobei das Bearbeiten die Schritte umfasst:
(a) Bestimmen der modalen Zeichenhöhe des gescannten Texts;
(b) Berechnen einer Referenzliniebreite durch Dividieren der modalen Zeichenhöhe durch das Schriftverhältnis;
(c) Bestimmen der Höhe und Breite des einen oder der mehreren im wesentlichen vertikalen Stapel;
(d) Berechnen eines momentanen Korrekturfaktors für irgendeinen des einen oder der mehreren im wesentlichen vertikalen Stapel durch Dividieren der Referenzbreite durch die Breite des im wesentlichen vertikalen Stapels, um den momentanen Korrekturfaktor an dem im wesentlichen vertikalen Stapel zu erhalten.

13. Speichermedium nach Anspruch 12, wobei das Bearbeiten ferner die Schritte umfasst:
(a) Unterteilen eines oder mehrerer Stopsegmente in eine vorbestimmte Anzahl an Untersegmenten aufeinanderfolgender Sichtfelder; und
(b) Löschen aus jedem Untersegment mindestens eines aber nicht aller der Sichtfelder in dem Untersegment.

14. Speichermedium nach Anspruch 13, wobei das Bearbeiten ferner Berechnen eines momentanen Korrekturfaktors in einem oder mehreren Stopsegmenten umfasst, wobei der momentane Korrekturfaktor für ein Stopsegment ein vorbestimmter Wert ist.

15. Speichermedium nach Anspruch 14, wobei das Bearbeiten ferner Berechnen eines momentanen Korrekturfaktors an einem Ort in einem erworbenen Textabbild umfasst, das nicht einen im wesentlichen vertikalen Stapel umfasst und das nicht ein Untersegment eines Stopsegments umfasst, das gemäß dem Verfahren nach Anspruch 5 korrigiert wurde, wobei das Bearbeiten umfasst entweder:
(a) Ermitteln von im wesentlichen vertikalen Stapeln, die den Ort an verschiedenen Seiten flankieren; Berechnen des momentanen Korrekturfaktors an jedem der zwei im wesentlichen vertikalen Stapel durch das Verfahren nach Anspruch 2 oder 3, und Berechnen des momentanen Korrekturfaktors an dem Ort durch Interpolieren der momentanen Korrekturfaktoren der im wesentlichen vertikalen Stapel;
(b) Ermitteln eines Untersegments in jedem von zwei Stopsegmenten, die den Ort an verschiedenen Seiten flankieren, Berechnen des momentanen Korrekturfaktors an jedem der zwei Untersegmente durch das Verfahren nach Anspruch 5, und Berechnen des momentanen Korrekturfaktors an dem Ort durch Interpolieren der momentanen Korrekturfaktoren der Untersegmente; oder
(c) Ermitteln eines im wesentlichen vertikalen Stapels und eines Untersegments eines Stopsegments, die den Ort an verschiedenen Seiten flankieren, Berechnen des momentanen Korrekturfaktors an dem im wesentlichen vertikalen Stapel durch das Verfahren nach Anspruch 2 oder 3, Berechnen des momentanen Korrekturfaktors an dem Untersegment durch das Verfahren nach Anspruch 6, und Berechnen des momentanen Korrekturfaktors an dem Ort durch Interpolieren der momentanen Korrekturfaktoren des im wesentlichen vertikalen Stapels und des Stopsegments.

16. Speichermedium, das ein ausführbares Computerprogramm speichert, um ein erworbenes Textabbild zu bearbeiten, um Verzerrungen an einem oder mehreren Orten in dem erworbenen Textabbild aufgrund einer Veränderung in der Scan-Geschwindigkeit während eines Scannens eines Texts zu beseitigen, wobei das Bearbeiten die Schritte umfasst:
(a) Berechnen des momentanen Korrekturfaktors an dem einen oder den mehreren Orten in dem Textabbild durch das Verfahren nach irgendeinem der Ansprüche 1 bis 6; und
(b) Löschen von Sichtfeldern an jedem des einen oder der mehreren Orte, an denen der Korrekturfaktor kleiner als eins ist, um ein Neuskalieren des erworbenen Textabbilds an jedem Ort durch einen Faktor zu erzeugen, der im wesentlichen gleich dem momentanen Korrekturfeld an jedem Ort ist.

17. Speichermedium nach Anspruch 16, um das Textabbild durch eine Zeichenerkennungssoftware zu bearbeiten.

## Revendications

1. Procédé pour traiter une image de texte acquise obtenue en scannant un texte avec un scanneur, le texte ayant une ou plusieurs fontes, chaque fonte ayant une proportion de fonte, ladite proportion de fonte étant la proportion du mode d'hauteur de caractère par rapport à la largeur de ligne la plus commune et essentiellement verticale des caractères, ledit mode d'hauteur de caractère étant la hauteur de caractère la plus commune, chaque emplacement dans le texte ayant été scanné à une vitesse instantanée de scannage, où l'image de texte est distordue dû à la variabilité de la vitesse instantanée de scannage, lequel procédé comprend l'étape suivante:
(a) pourvoir un mode d'hauteur de caractère pour chaque fonte;
le procédé étant **caractérisé en ce qu'**il comprend en outre une étape de:
(b) utiliser ledit mode d'hauteur de caractère et ladite proportion de fonte pour construire un facteur de correction afin de corriger l'image de texte distordue.

2. Procédé selon la revendication 1 pour déterminer le facteur de correction instantané à une ou plusieurs piles essentiellement verticales dans une image de texte acquise, une pile essentiellement verticale étant une pile dont la hauteur excède un premier nombre prédéterminé et dans laquelle la proportion d'une largeur de la pile par rapport à la largeur d'un rectangle reliant excède une deuxième valeur prédéterminée, les piles essentiellement verticales ayant des largeurs, dans lequel ladite étape (b) comprend en outre l'utilisation des largeurs d'une ou de plusieurs piles essentiellement verticales dans l'image de texte acquise.

3. Procédé selon la revendication 2 comprenant les étapes de:
(a) déterminer le mode d'hauteur de caractère du texte scanné (60);
(b) calculer une largeur de référence de ligne en divisant le mode d'hauteur de caractère par la proportion de fonte (61);
(c) déterminer la hauteur et la largeur desdites une ou plusieurs piles essentiellement verticales (64);
(d) calculer un facteur de correction instantané pour n'importe laquelle desdites une ou plusieurs piles essentiellement verticales en divisant la largeur de référence par la largeur de la pile essentiellement verticale pour obtenir le facteur de correction instantané à la pile essentiellement verticale (65); et
(e) mettre le facteur de correction en équivalence à un, si le facteur de correction calculé selon l'étape (d) est supérieur à un.

4. Procédé selon la revendication 3 comprenant en outre les étapes de:
(a) diviser un ou plusieurs segments d'arrêt en un nombre prédéterminé de sous-segments de champs de vision consécutifs, un champ de vision étant une portion d'image de texte acquise par le scanneur à un instant; et
(b) effacer de chaque sous-segment au moins un, mais pas tous les champs de vision dans le sous-segment.

5. Procédé selon la revendication 4 comprenant en outre l'étape de calculer un facteur de correction instantané dans un ou plusieurs segments d'arrêt, un segment d'arrêt étant une série de champs de vision consécutifs dont le nombre excède un nombre prédéterminé, lesquels sont tous presque identiques à un premier champ de vision de la série, deux champs de vision étant presque identiques s'il n'y a pas dans l'un des deux champs de vision un sous-champ de pixels contigus d'une longueur plus grande qu'une longueur prédéterminé, dans lequel tous les pixels sont différents des pixels correspondants dans l'autre champ de vision, dans lequel le facteur de correction instantané dans un segment d'arrêt est une valeur prédéterminée.

6. Procédé pour calculer un facteur de correction instantané à un emplacement dans une image de texte acquise ne comprenant pas une pile essentiellement verticale et ne comprenant pas un segment d'arrêt, laquelle a été corrigée selon le procédé de la revendication 5 (68), le procédé comprenant ou:
(a) identifier des piles essentiellement verticales flanquant l'emplacement sur des côtés différents; calculer le facteur de correction instantané à chacune des deux piles essentiellement verticales selon le procédé de la revendication 2 ou 3, et calculer le facteur de correction instantané audit emplacement par interpolation des facteurs de correction instantanés des piles essentiellement verticales;
(b) identifier un sous-segment dans chacun de deux segments d'arrêt flanquant l'emplacement sur des côtés différents, calculer le facteur de correction instantané à chacun des deux sous-segments selon le procédé de la revendication 5, et calculer le facteur de correction instantané audit emplacement par interpolation des facteurs de correction instantanés des sous-segments; ou
(c) identifier une pile essentiellement verticale et un sous-segment d'un segment d'arrêt flanquant l'emplacement sur des côtés différents, calculer le facteur de correction instantané à la pile essentiellement verticale selon le procédé de la revendication 2 ou 3, calculer le facteur de correction instantané au sous-segment selon le procédé selon la revendication 5 et calculer le facteur de correction instantané audit emplacement par interpolation des facteurs de correction instantanés de la pile essentiellement verticale et du segment d'arrêt.

7. Procédé pour supprimer des distorsions dans une image de texte acquise à un ou plusieurs emplacements dues à une variation de la vitesse de scannage pendant le scannage d'un texte (69), le procédé comprenant les étapes de:
(a) calculer le facteur de correction instantané auxdits un ou plusieurs emplacements dans l'image de texte selon le procédé de l'une quelconque des revendications 1 à 6;
et
(b) effacer des champs de vision à chacun desdits un ou plusieurs emplacements où le facteur de correction est inférieur à un pour produire un recadrage de l'image de texte acquise à chaque emplacement par un facteur substantiellement égal au facteur de correction instantané à chaque emplacement.

8. Procédé selon la revendication 7 comprenant en outre l'étape de traiter l'image de texte par un logiciel de reconnaissance de caractère.

9. Système pour traiter un texte, comprenant:
(a) un scanneur ayant un détecteur optique unidimensional et aucune pièce mécanique pour déterminer la vitesse de scannage; et
(b) une CPU associée à un support de mémorisation et exécutant un logiciel pour exécuter le procédé selon l'une quelconque des revendications 1 à **8**.

10. Support de mémorisation mémorisant un programme d'ordinateur exécutable pour traiter une image de texte acquise obtenue en scannant un texte avec un scanneur, le texte ayant une ou plusieurs fontes, chaque fonte ayant une proportion de fonte, chaque emplacement dans le texte ayant été scanné à une vitesse instantanée de scannage, où l'image de texte est distordue dû à la variabilité de la vitesse instantanée de scannage, le traitement comprenant l'étape suivante:
(a) pourvoir un mode d'hauteur de caractère pour chaque fonte;
le support de mémorisation étant **caractérisé en ce que** le traitement comprend en outre:
(b) utiliser ledit mode d'hauteur de caractère et ladite proportion de fonte pour construire un facteur de correction afin de corriger l'image de texte distordue.

11. Support de mémorisation selon la revendication 10 mémorisant un programme d'ordinateur exécutable pour déterminer le facteur de correction instantané à une ou plusieurs piles essentiellement verticales dans une image de texte acquise, les piles essentiellement verticales ayant des largeurs, ladite étape (b) comprenant en outre l'utilisation des largeurs d'une ou de plusieurs piles essentiellement verticales dans l'image de texte acquise.

12. Support de mémorisation selon la revendication 11, dans lequel le traitement comprend les étapes de:
(a) déterminer le mode d'hauteur de caractère du texte scanné;
(b) calculer une largeur de référence de ligne en divisant le mode d'hauteur de caractère par la proportion de fonte;
(c) déterminer la hauteur et la largeur desdites une ou plusieurs piles essentiellement verticales;
(d) calculer un facteur de correction instantané pour n'importe laquelle desdites une ou plusieurs piles essentiellement verticales en divisant la largeur de référence par la largeur de la pile essentiellement verticale pour obtenir le facteur de correction instantané à la pile essentiellement verticale.

13. Support de mémorisation selon la revendication 12, dans lequel le traitement comprend en outre les étapes de:
(a) diviser un ou plusieurs segments d'arrêt en un nombre prédéterminé de sous-segments de champs de vision consécutifs; et
(b) effacer de chaque sous-segment au moins un, mais pas tous les champs de vision dans le sous-segment.

14. Support de mémorisation selon la revendication 13, dans lequel le traitement comprend en outre le calcul d'un facteur de correction instantané dans un ou plusieurs segments d'arrêt, dans lequel le facteur de correction instantané pour un segment d'arrêt est une valeur prédéterminée.

15. Support de mémorisation selon la revendication 14, dans lequel le traitement comprend en outre le calcul d'un facteur de correction instantané à un emplacement dans une image de texte acquise ne comprenant pas une pile essentiellement verticale et ne comprenant pas un sous-segment d'un segment d'arrêt, laquelle a été corrigée selon le procédé de la revendication 5, le traitement comprenant ou:
(a) identifier des piles essentiellement verticales flanquant l'emplacement sur des côtés différents; calculer le facteur de correction instantané à chacune des deux piles essentiellement verticales selon le procédé de la revendication 2 ou 3 et calculer le facteur de correction instantané audit emplacement par interpolation des facteurs de correction instantanés des piles essentiellement verticales;
(b) identifier un sous-segment dans chacun de deux segments d'arrêt flanquant l'emplacement sur des côtés différents, calculer le facteur de correction instantané à chacun des deux sous-segments selon le procédé de la revendication 5, et calculer le facteur de correction instantané audit emplacement par interpolation des facteurs de correction instantanés des sous-segments; ou
(c) identifier une pile essentiellement verticale et un sous-segment d'un segment d'arrêt flanquant l'emplacement sur des côtés différents, calculer le facteur de correction instantané à la pile essentiellement verticale selon le procédé de la revendication 2 ou 3, calculer le facteur de correction instantané au sous-segment selon le procédé de la revendication 6 et calculer le facteur de correction instantané audit emplacement par interpolation des facteurs de correction instantanés de la pile essentiellement verticale et du segment d'arrêt.

16. Support de mémorisation mémorisant un programme d'ordinateur exécutable pour traiter une image de texte acquise pour supprimer des distorsions à un ou plusieurs emplacements dans l'image de texte acquise dues à une variation de la vitesse de scannage pendant le scannage d'un texte, le traitement comprenant les étapes de:
(a) calculer le facteur de correction instantané auxdits un ou plusieurs emplacements dans l'image de texte selon le procédé de l'une quelconque des revendications 1 à 6;
et
(b) effacer des champs de vision à chacun desdits un ou plusieurs emplacements où le facteur de correction est inférieur à un pour produire un recadrage de l'image de texte acquise à chaque emplacement par un facteur substantiellement égal au champ de correction instantané à chaque emplacement.

17. Support de mémorisation selon la revendication 16, pour traiter l'image de texte par un logiciel de reconnaissance de caractère.
